# EUROPÄISCHE PATENTSCHRIFT

(11) **EP 0 725 513 B1**
(45) Veröffentlichungstag und Bekanntmachung des Hinweises auf die Patenterteilung: **07.04.2004**
(21) Anmeldenummer: 96100595.6
(22) Anmeldetag: 17.01.1996
(51) Int. Cl.: H04L 12/40, H04L 25/08, H04L 29/14, B60R 16/02

(54) **Fehlertolerante Endstufe für ein digitales Zweileiterbus-Datenkommunikationssystem**
Fault-tolerant final stage for digital two-wire bus data communication system
Etage final, tolérant des fautes, pour un système digital de communication de données de configuration bus bifilaire

(30) Priorität: 03.02.1995 DE 19503460
(43) Veröffentlichungstag der Anmeldung: 07.08.1996
(73) Patentinhaber: DaimlerChrysler AG, 70567 Stuttgart (DE)
(72) Erfinder: Minuth, Jürgen, Dipl.-Ing., D-73054 Eislingen (DE); Kaufmann, Oliver, Dipl.-Ing., D-78464 Konstanz (DE)

(56) Entgegenhaltungen:
- EP-A- 0 529 602
- US-A- 4 764 759
- ELEKTRONIK, Bd. 40, Nr. 20, August 1991 MUNCHEN, DE, Seiten 96-101, XP 000260942 JENS-ULF PEHRS, HANS-CHRISTIAN REUSS 'CAN - das sichere Busconcept'
- PATENT ABSTRACTS OF JAPAN vol. 17 no. 213 (E-1356) ,26.April 1993 & JP-A-43 051034 (MITSUBISHI ELECTRIC CORP) 4.Dezember 1992,

## Beschreibung

Die Erfindung bezieht sich auf eine fehlertolerante Endstufe für ein digitales Zweileiterbus-Datenkommunikationssystem nach dem Oberbegriff des Anspruchs 1 des Anspruchs 2 und des Anspruchs 3. Derartige Endstufen finden beispielsweise in Kraftfahrzeugen innerhalb eines CAN-Systems Verwendung. Mit einer solchen Endstufe ausgerüstet kann jede von einer Mehrzahl von Teilnehmerendstellen des Kommunikationssystems mit den anderen über den Zweileiterbus im wechselseitigen Datenverkehr im Zeitmultiplexverfahren kommunizieren. Der Zweileiterbus besteht aus einer zweiadrigen Leitung, die z.B. im Fahrzeug innerhalb eines Kabelbaums verläuft. Bei einem solchen Zweileiterdatenbus können Ausfälle in Form von Kabelbrüchen oder Kurzschlüssen der Leitungen mit dem einen oder dem anderen Versorgungsspannungspegel oder in Form eines Kurzschlusses der beiden Leitungen gegeneinander auftreten.

Es ist bereits bekannt, in einer derartigen Endstufe Maßnahmen zu treffen, um bei Auftreten eines sogenannten Einfachfehlers, d.h. eines einzigen von den obigen Leitungsfehlern, eine Datenkommunikation weiter aufrechterhalten zu können, wobei dann von Differenz- auf Eindrahtbetrieb übergegangen wird. Eine der bekannten Maßnahmen besteht darin, nach einem erkannten Kommunikationsfehler die Kommunikation durch geeignete Steuerung mittels eines in den Endstufen vorgeschaltenen Mikrocontrollers unter Zuhilfenahme aufwendiger Softwarealgorithmen wiederherzustellen, was allerdings meist einige Sekunden Totzeit erfordert.

Von J.U.Pehrs und H-C.Reuss wird in "CAN-das sichere Buskonzept", Elektronik 17/1991, Seite 96 bzw. Elektronik, Bd. 40, Nr. 20/August 1991, Seiten 96-101 ein CAN-System beschrieben, bei dem jeder Teilnehmerknoten einen Microcontroller besitzt, der Busleitungsfehler erkennt und demgemäß den passenden Übertragungsmodus einstellt. Zur Fehlererkennung werden dort von jedem Teilnehmerknoten Testnachrichten gesendet, die von allen anderen Teilnehmerknoten empfangen werden können. Nach Auswertung der Testergebnisse stellt jeder Knoten den optimalen Übertragungsmodus ein, wobei die differenzielle Zweidrahtübertragung aufgrund ihrer bekannten Vorteile Priorität genießt.

Einer in der Offenlegungsschrift DE 42 29 175 A1 offenbarten, für Zweidrahtempfang ausgelegten Netzwerkschnittstelle ist ein Mikrorechner vorgeschaltet, der die Übermittlung von Testnachrichten überwacht und die Netzwerkschnittstelle abhängig vom erkannten Busleitungszustand über zwei in ihr vorgesehene Schaltelemente zwischen Zweidrahtbetrieb und Eindrahtbetrieb umschalten kann.

In der Offenlegungsschrift EP 0 529 602 A2 wird eine fehlertolerante Empfangsstufe für ein digitales Zweileiterbus-Datenkommunikationssystem offenbart, die zum Ziel hat, selbst bei einem auftretenden Einfachfehler die Übertragung von Daten verzögerungsfrei weiterführen zu können. Zu diesem Zweck besitzt die Empfangsstufe eingangsseitig eine Komparatorstufe, welche die auf den Bitleitungen ankommenden Spannungspegel in ganz bestimmter Weise so auswertet, daß die möglichen Betriebszustände des Zweileiterdatenbusses eindeutig voneinander unterschieden werden können. Die nachfolgenden Einheiten der Empfangsstufe sind so ausgelegt, daß der Datenempfang unabhängig davon, ob sich der Zweileiterdatenbus im fehlerfreien Betrieb oder in einem Zustand mit einem Einfachfehler befindet, verzögerungsfrei fortgeführt werden kann. Die Komparatorstufe bildet dabei eine Zwischenverarbeitungsstufe, deren Ausgangssignale von den nachfolgenden Einheiten der Empfangsstufe als Basis zur Gewinnung der Dateninformation dienen.

Der Erfindung liegt als technisches Problem die Bereitstellung einer fehlertoleranten Endstufe der eingangs genannten Art zugrunde, die bei Auftreten eines beliebigen Einfachfehlers selbsttätig in Echtzeit und ohne zusätzlichen Softwareaufwand vom Zweileiter- in den Einleiterbetrieb umzuschalten und dadurch die Datenkommunikation verzögerungsfrei weiterzuführen vermag.

Dieses Problem wird durch eine fehlertolerante Endstufe mit den Merkmalen des Anspruchs 1 des Anspruchs 2 oder des Anspruchs 3 gelöst. Die Endstufe gliedert sich in ein Sendemodul sowie in eine Empfangsstufe, die ihrerseits aus einem Modul zur Zwischenverarbeitung ankommender Bussignale, einem Empfangsmodul und einem Zustandserkennungsmodul besteht. Das Zustandserkennungsmodul dient dazu, den Einfachfehler eines Kurzschlusses der beiden Busleitungen untereinander erkennen zu können. Für diesen besonderen Betriebszustand schaltet das Zwischenverarbeitungsmodul das Sendemodul von einer differentiellen Zweidraht- auf eine Eindrahtbetriebsart um, wozu am Sendemodul ein zugehöriger Steuereingang vorgesehen und das Sendemodul geeignet ausgelegt ist. Bei allen anderen Busleitungszuständen kann das Sendemodul in der Betriebsart, die bei fehlerfreien Busleitungen vorgesehen ist, verbleiben. Das Zwischenverarbeitungsmodul ist so ausgelegt, daß es die Bussignale für das Empfangsmodul sowohl bei fehlerfreien Busleitungen als auch bei Unterbrechung oder Kurzschluß gegen die hohe oder niedrige Versorgungsspannung von einer der beiden Busleitungn sowie bei Kurzschluß der beiden Busleitungen untereinander selbsttätig oder gesteuert vom. Zustandserkennungsmodul aufbereitet, so daß die Dateninformation ohne Verzögerung zum Empfangsmodul weitergeleitet werden kann. Das Empfangsmodul bereitet dann die zwischenverarbeiteten Datenbussignale für eine nachfolgende Datenverarbeitungseinheit auf.

Die Erfindung ermöglicht mit geringem schaltungstechnischem Aufwand die Umschaltung des Sendemoduls zwischen der Differenz- und der Eindrahtbetriebsart, wobei in letzterer der L-Ausgang auf einen Schwebespannungszustand gesetzt ist.

In einer alternativen Ausgestaltung des Zwischenverarbeitungsmoduls ist dieses gemäß eines Differenzbetriebansatzes ausgelegt, wobei es zwischen einer Zweidrahtverarbeitung und einer Eindrahtverarbeitung auf der H-Busleitung umschaltbar ist. Die letztere Betriebsart wird gewählt, wenn ein Kurzschluß der beiden Busleitungen gegeneinander vorliegt. Zur Umschaltung wird daher günstigerweise das Ausgangssignal des Zustandserkennungsmoduls verwendet, welches bereits zur entsprechenden Betriebsartumschaltung des Sendemoduls dient. Das in diesem Differenzbetriebansatz ausgelegte Zwischenverarbeitungsmodul filtert hohe dynamische und statische Gleichtaktstörungen zuverlässig aus, was einen Einsatz in stark gestörten Datennetzwerken ermöglicht.

In einer alternativen Ausgestaltung ist das Zwischenverarbeitungsmodul gemäß eines dynamischen, massebezogenen Ansatzes ausgelegt. Es besitzt zur aus den Bussignalen abgeleiteten, asymmetrischen Differenzbildung einen dreistufigen Aufbau mit einer eingangsseitigen Pegelanpassungsstufe, einer Komparatorstufe, welche die beiden Datenbussignale gleichzeitig und unabhängig voneinander mit dynamischer Schwellennachführung weiterverarbeitet, sowie einer ausgangsseitigen Pegelanpassungsstufe. Das so ausgelegte Zwischenverarbeitungsmodul vermag die anstehenden Datensignale von den Busleitungen in allen Betriebsarten, d.h. im fehlerfreien Betrieb ebenso wie im Betrieb mit einem beliebigen Einfachfehler, selbständig und verzögerungsfrei für das nachfolgende Empfangsmodul aufzubereiten.

In einer schaltungstechnisch vorteilhaften Realisierung besteht das Empfangsmodul aus einem invertierenden komparator mit dem Eingangssignal dynamisch nachgeführter Schwelle.

Für das Zustandserkennungsmodul ist schaltungstechnisch eine Realisierung als Differenz-Fensterkomparator mit nachgeschalteter, asymmetrischer Zeitfilterung vorteilhaft.

Eine bevorzugte Ausführungsform der Erfindung ist in den Zeichnungen dargestellt und wird nachfolgend beschrieben. Hierbei zeigen:
- Fig. 1: ein schematisches Blockschaltbild einer fehlertoleranten Endstufe für ein CAN-System eines Kraftfahrzeuges,
- Fig. 2: ein detaillierteres Schaltbild eines in der Endstufe von Fig. 1 verwendeten Sendemoduls,
- Fig. 3: ein detaillierteres Schaltbild einer ersten schaltungstechnischen Realisierung eines in der Endstufe von Fig. 1 verwendeten Zwischenverbarbeitungsmoduls,
- Fig. 4: ein detaillierteres Schaltbild einer zweiten schaltungstechnischen Realisierung des in der Endstufe von Fig. 1 vorgesehenen Zwischenverarbeitungsmoduls,
- Fig. 5: ein detaillierteres Schaltbild einer in dem Zwischenverarbeitungsmodul von Fig. 4 verwendeten Komparatorschaltung,
- Fig. 6: ein detaillierteres Blockschaltbild einer in der Endstufe von Fig. 1 verwendeten Empfangsstufe,
- Fig. 7: ein Funktionsblock-Schaltbild eines in der Endstufe von Fig. 1 verwendeten Zustandserkennungsmoduls und
- Fig. 8: ein detaillierteres Schaltbild des Zustandserkennungsmoduls gemäß Fig. 7.

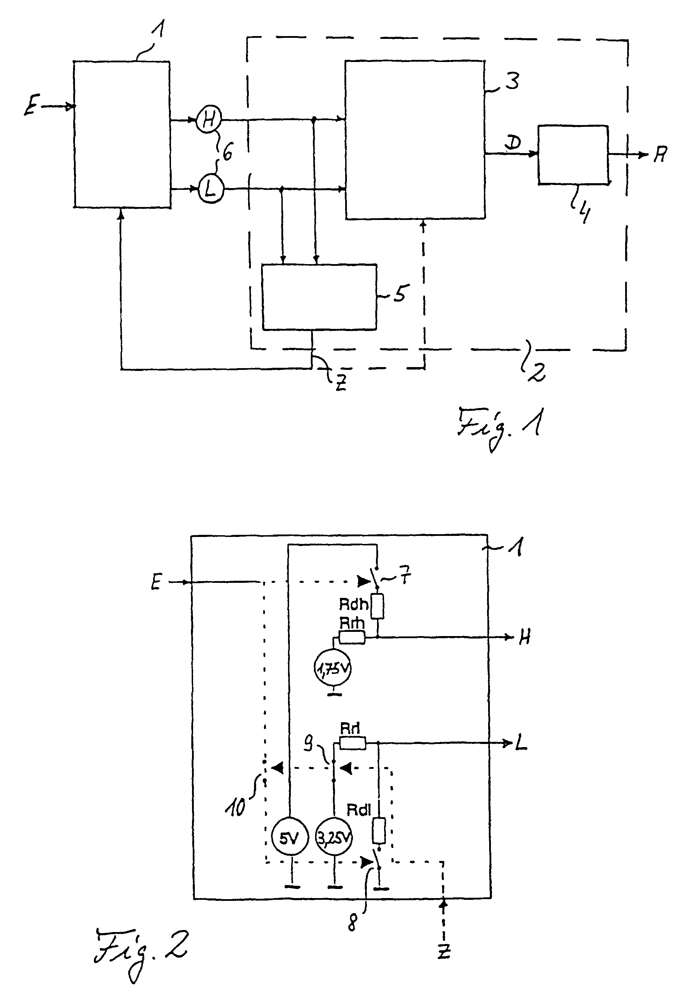

In Fig. 1 ist eine fehlertolerante Endstufe, die für Teilnehmerendstellen eines im Zeitmultiplexverfahren arbeitenden CAN-Systems in einem Kraftfahrzeug verwendbar ist, in einem Übersichtsblockschaltbild dargestellt. Die Endstufe besteht aus einem Sendemodul (1), welches von einer nicht gezeigten Datenverarbeitungseinheit eingehende, serielle Datensignale (E) in Bussignale für einen digitalen Zweileiterbus (6) mit einer H-Busleitung und einer L-Busleitung transferiert. Empfangsseitig enthält die Endstufe eine an die beiden Datenbusleitungen (H, L) angeschlossene Empfangsstufe (2), die aus einem Zwischenverarbeitungsmodul (3) und einem nachgeschalteten Empfangsmodul (4) sowie einem eingangsseitig parallel mit dem Zwischenverarbeitungsmodul (3) an die beiden Datenbusleitungen (H, L) angeschlossenen Zustandserkennungsmodul (5) besteht. Das Zwischenverarbeitungsmodul bereitet die auf den beiden Busleitungen (H, L) ankommenden Signale für das nachgeschaltete Empfangsmodul (4) auf, das seinerseits die zwischenverarbeiteten Signale (D) in Signale (A) für eine nachfolgende, nicht gezeigte Datenverarbeitungseinheit aufbereitet. Das Zustandserkennungsmodul (5) dient der Erkennung eines Kurzschlusses der beiden Datenbusleitungen (6) gegeneinander und gibt ein entsprechendes, kurzschlußindikatives Ausgangssignal (Z) ab.

Die dergestalt aufgebaute Endstufe ist in der Lage, die Datenkommunikation über den Datenbus (6) sowohl bei fehlerfreien Busleitungen (H, L) als auch bei Auftreten eines beliebigen Einfachfehlers im Datenbus (6) selbsttätig in Echtzeit aufrechtzuerhalten, ohne daß hierzu spezielle Softwarealgorithmen benötigt werden. Die sieben möglichen Einfachfehler sind hierbei ein Kurzschluß der H-Busleitung oder der L-Busleitung gegen den hohen oder den niedrigen Versorgungsspannungspegel, eine Unterbrechung einer der beiden Busleitungen (H, L) oder ein Kurzschluß von H-Busleitung und L-Busleitung gegeneinander. Das Sendemodul (1) ist dabei so ausgelegt, daß es in den sechs erstgenannten Fehlerzuständen sowie im fehlerfreien Datenbuszustand jeweils in einer ersten Betriebsart funktionsfähig ist, während es bei Auftreten eines Kurzschlusses der Datenbusleitungen (H, L) untereinander, gesteuert von dem diesen Kurzschluß erkennenden Zustandserkennungsmodul (5), in eine zweite Betriebsart wechselt. Analog ist das Zwischenverarbeitungsmodul (3) so ausgelegt, daß es die eingehende Dateninformation in jedem der acht genannten Datenbuszustände korrekt an das Empfangsmodul weiterzuleiten vermag, wobei es abhängig von der schaltungstechnischen Realisierung im Fall eines Kurzschlusses der Busleitungen (H, L) untereinander den Datentransfer entweder vollständig selbsttätig oder durch Umschalten in eine andere Betriebsart, gesteuert vom Zustandserkennungsmodul (5), weiterführt.

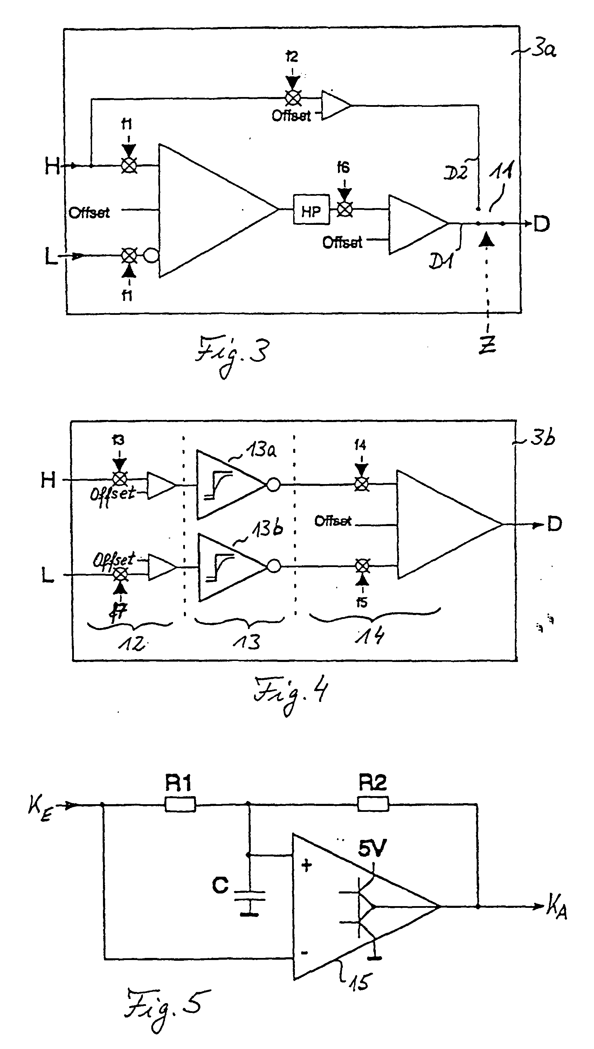

In den Fig. 2 bis 8 sind beispielhafte Realisierungen der einzelnen Komponenten der fehlertoleranten Endstufe von Fig. 1 gezeigt, welche die genannten, für die jeweiligen Komponenten geforderten Funktionen erfüllen. Darauf wird im folgenden näher eingegangen. Diese spezielle Dimensionierung der Endstufe besitzt einen Arbeitsbereich zwischen 10kBd und 125kBd. Die Bitzeiten betragen zwischen 8µs und 100µs. Durch Dimensionierungsanpassungen sind andere Übertragungsraten realisierbar. Die Busspannungspegel sind wie folgt festgelegt. Im rezessiven Zustand liegt die H-Busleitung hochohmig an 1,75V und die L-Busleitung hochohmig an 3,25V. Im dominanten Zustand liegt die H-Busleitung niederohmig an 5V und hochohmig an 1,75V und die L-Busleitung niederohmig an Masse sowie hochohmig an 3,25V. Es versteht sich, daß die in den Figuren auftretenden Offset-Spannungen bei der speziellen Dimensionierung den bekannten Designgrundsätzen angepaßt sind.

Fig. 2 zeigt den schaltungstechnischen Aufbau des Sendemoduls (1). Der H-Ausgang liegt über einen hochohmigen Widerstand (Rrh) an einer 1,75V-Spannungsversorgung sowie über einen niederohmigen Widerstand (Rdh) und ein erstes ansteuerbares Schaltelement (7) an einer 5V-Spannungsversorgung. Das Schaltelement (7) wird von dem eingehenden Signal (E) angesteuert. Der L-Ausgang liegt über einen niederohmigen Widerstand (Rdl) und ein zweites ansteuerbares Schaltelement (8) an Masse sowie über einen hochohmigen Widerstand (Rrl) und ein drittes ansteuerbares Schaltelement (9) an einer 3,25V-Spannungsversorgung. Über ein viertes ansteuerbares Schaltelement (10) steuert das Eingangssignal (E) das zweite Schaltelement (8) synchron zum ersten Schaltelement (7) an. Über einen Steuereingang ist das Ausgangssignal (Z) von der Zustandserkennungseinheit (5) zuführbar, welches im Sendemodul (1) synchron das dritte (9) und das vierte Schaltelement (10) ansteuert.

Durch diesen Aufbau ergibt sich folgende Funktionsweise des Sendemoduls (1). Solange nicht der Betriebszustand eines Kurzschlusses der beiden Datenbusleitungen (H, L) untereinander vorliegt, hält das Ausgangssignal (Z) der Zustandserkennungseinheit (5) das dritte (9) und das vierte Schaltelement (10) geschlossen. Je nach Pegel des Eingangssignals (E) liegen dann der H-Ausgang niederohmig an 5V und gleichzeitig der L-Ausgang niederohmig an Masse oder der H-Ausgang hochohmig an 1,75V und der L-Ausgang hochohmig an 3,25V. Liegt ein Kurzschluß der beiden Datenbusleitungen (H, L) untereinander vor, so steuert die Zustandserkennungseinheit (5) das dritte (9) und das vierte Schaltelement (10) in den geöffneten Zustand. Dies führt zum einen dazu, daß das Eingangssignal (E) nicht mehr das zweite Schaltelement (8) ansteuert, das auf diese Weise geöffnet bleibt, wodurch der L-Ausgang von Masse abgekoppelt wird. Zum anderen wird der L-Ausgang durch das Öffnen des dritten Schaltelements (9) auch von der 3,25V-Spannungsversorgung abgekoppelt. Der H-Ausgang des Sendemoduls (1) besitzt auch in diesem Betriebszustand die beiden möglichen Zustände einer niederohmigen Anbindung an 5V und einer hochohmigen Anbindung an 1,75V, gesteuert vom Eingangssignal (E). Damit realisiert das Sendemodul (1) bei gegeneinander kurzgeschlossenen Busleitungen (H, L) den sogenannten Eindrahtbetrieb und in den übrigen Busleitungszuständen den sogenannten Differenzbetrieb. In ersterem Fall wird die Dateninformation auf den H-Ausgang gegeben, wobei die L-Busleitung aufgrund des Kurzschlusses denselben Spannungspegel einnimmt, während in letzterem Fall komplementäre Spannungspegel an den H-bzw. den L-Ausgang gelegt werden. Es versteht sich, daß der Schaltungsaufbau des Sendemoduls, insbesondere die Widerstände, so dimensioniert ist, daß festgelegte, maximale Einschwingzeiten bei Spannungspegelwechseln eingehalten werden.

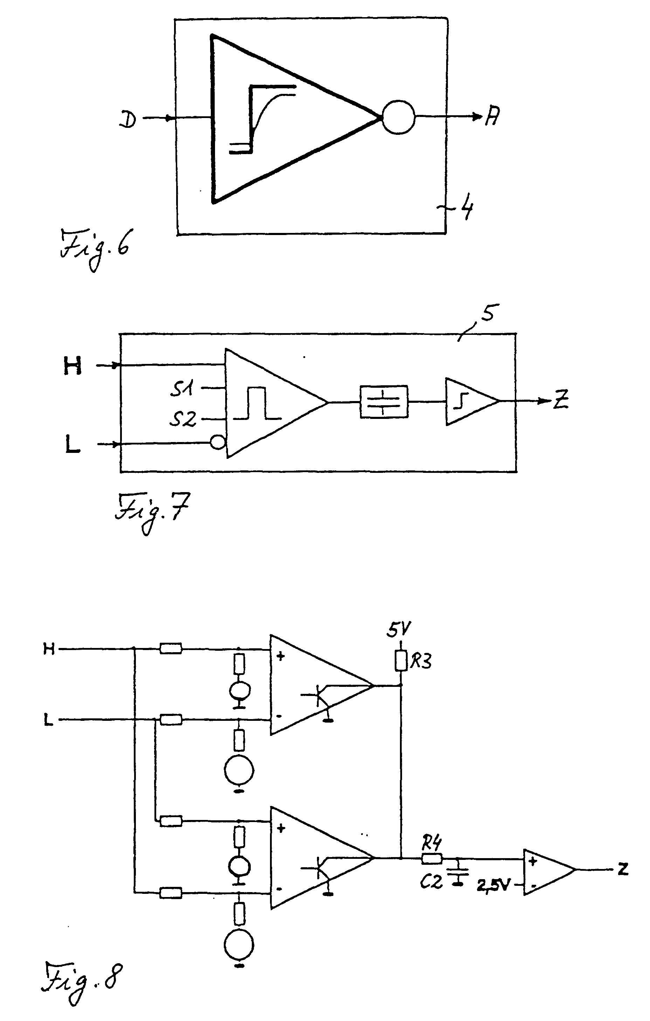

Für das Zwischenverarbeitungsmodul (3) von Fig. 1 zeigen die Figuren 3 und 4 zwei unterschiedliche Realisierungsmöglichkeiten.

Beiden Realisierungen ist gemeinsam, daß das jeweilige Zwischenverarbeitungsmodul gegen Gleichtaktstörungen auf den Busleitungen (H, L) relativ zum Bezugspotential der Elektronik unempfindlich ist und die eingehenden Bussignale (H, L) in allen acht genannten Busleitungszuständen zur Weiterverarbeitung im nachgeschalteten Empfangsmodul (4) aufzubereiten vermag.

Das in Fig. 3 dargestellte Zwischenverarbeitungsmodul (3a) ist gemäß eines Differenzansatzes ausgelegt, wobei es hohe dynamische und statische Gleichtaktstörungen zuverlässig ausfiltert, so daß es sich besonders für den Einsatz in stark gestörten Netzwerken eignet. Das Zwischenverarbeitungsmodul (3a) besitzt ausgangsseitig ein ansteuerbares Schaltelement (11), das vom Ausgangssignal (Z) des Zustandserkennungsmoduls (5) angesteuert wird, wodurch das Zwischenverarbeitungsmodul (3a) zwischen zwei Betriebsarten umschaltbar ist. In der in Fig. 3 gezeigten Stellung des Schaltelements (11) liegt eine Differenzbetriebsart vor, bei der die eingehenden Bussignale (H, L) eingangsseitig zur Pegelanpassung mit einem Faktor (f1) von 1/12 multipliziert werden, wonach die Differenzbildung erfolgt. Das resultierende Signal wird dann in einem Hochpaß (HP) einer Gleichtaktbereinigung unterworfen und anschließend zur Pegelanpassung mit einem Faktor (f6) von 2 multipliziert sowie um einen den bekannten Designgrundsätzen entsprechenden Offset verschoben. Dies stellt die Signalverarbeitung bei fehlerfreien Busleitungen (H, L) sowie bei Einfachfehlern derselben mit Ausnahme eines Kurzschlusses der Busleitungen (H, L) untereinander dar. Das gewonnene Signal (D1) wird vom angesteuerten Schaltelement (11) als Ausgangssignal (D) durchgelassen. Im Zustand eines Kurzschlusses der beiden Busleitungen (H, L) gegeneinander steuert die Zustandserkennungseinheit (5) das Schaltelement (11) in die andere Schaltstellung. In dieser Stellung wird das Ausgangssignal (D) von einem allein aus der H-Busleitung gewonnen Signal (D2) gebildet, wozu das H-Signal zur Pegelanpassung mit einem Faktor (f2) von 1/6 multipliziert und um einen den bekannten Designgrundsätzen entsprechenden Offset verschoben wird. Das Zwischenverarbeitungsmodul (3a) mit dem Schaltungsaufbau gemäß Fig. 3 wird folglich vom Zustandserkennungsmodul (5) zwischen Differenzbetrieb und Eindrahtbetrieb umgeschaltet.

Die in Fig. 4 dargestellte Realisierung eines Zwischenverarbeitungsmoduls (3b) leistet eine selbständige Anpassung auch an den Zustand gegeneinander kurzgeschlossener Busleitungen (H, L) und damit in allen acht erwähnten Leitungszuständen. Dieses Zwischenverarbeitungsmodul (3b) besitzt einen dreistufigen Aufbau mit einer eingangsseitigen Pegelanpassungsstufe (12), einer mittigen Komparatorstufe (13) und einer ausgangsseitigen Pegelanpassungsstufe (14). In der eingangsseitigen Pegelanpassungsstufe (12) werden die eingehenden Bussignale (H, L) jeweils getrennt voneinander mit einem Faktor (f3) von -1/6 und einem Faktor (f7) von 1/6 multipliziert und um einen den bekannten Designgrundsätzen entsprechenden Offset verschoben. In der nachfolgenden Komparatorstufe (13) werden die dergestalt vorbehandelten Signale gleichzeitig und unabhängig voneinander mit Hilfe je eines Komparators (13a, 13b) mit dynamischer Schwellennachführung ausgewertet. Dabei wird die Schwelle aus dem Ruhezustand der eingehenden Signale entsprechend einer geeignet gewählten Zeitkonstante und eines geeignet gewählten Spannungsabstandes abgeleitet.

Eine mögliche Realisierung, die für die beiden identischen Komparatoren (13a, 13b) dieses Zwischenverarbeitungsmoduls (3b) verwendbar ist, ist in Fig. 5 im Detailschaltbild angegeben. Die Implementierung dieses Komparators beinhaltet ein Komparator-IC (15) sowie zwei Widerstände (R1, R2) und einen Kondensator (C). Die beiden Widerstände (R1, R2) bilden einen Spannungsteiler zwischen Eingangssignal (K_{E}) und Ausgangssignal (K_{A}). Mit Hilfe dieses Spannungsteilers wird die Komparatorschwelle aus dem Eingangssignal (K_{E}) abgeleitet. Während der invertierende Eingang des Komparator-ICs direkt vom Eingangssignal (K_{E}) beaufschlagt ist, ist sein nichtinvertierender Eingang mit dem Mittenabgriff des Spannungsteilers verbunden, wobei der Kondensator (C) zwischen diesem Mittenabgriff und Masse liegt. Mit dem so gebildeten Tiefpaß aus den beiden Widerständen (R1, R2) und dem Kondensator (C) wird die Einstellzeit der dynamischen Schwelle bestimmt. Eine Beschaltung als Invertierer erlaubt ein einfaches Schaltungsdesign.

Die beiden getrennten Ausgangssignale der Komparatorstufe (13) werden dann in der nachfolgenden Pegelanpassungsstufe (14) zum Ausgangssignal (D) des Zwischenverarbeitungsmoduls (3b) weiterverarbeitet. Dazu werden zunächst das zur H-Busleitung gehörige Signal mit einem Faktor (f4) von 1/3,5 und das zur L-Busleitung gehörige Signal mit einem Faktor (f5) von 1/7 multipliziert, wonach beide Signale addiert und um einen den bekannten Designgrundsätzen entsprechenden Offset verschoben werden. Aus dem beschriebenen Schaltungsaufbau ergibt sich, daß diese Realisierung des Zwischenverarbeitungsmoduls (3b) in der Lage ist, eine ankommende Dateninformation sowohl bei fehlerfreien Busleitungen (H, L) als auch bei jedem beliebigen der oben angegebenen sieben Einfachfehler in ein vom nachgeschalteten Empfangsmodul (4) auswertbares Ausgangssignal (D) umzuwandeln. Insbesondere stellt die Ungleichbehandlung des vorbehandelten H-Signals gegenüber dem vorbehandelten L-Signal in der abschließenden Pegelanpassungsstufe (14) sicher, daß bei gegeneinander kurzgeschlossenen Datenbusleitungen (H, L) die Dateninformation nicht durch die Differenzbildungswirkung des Zwischenverarbeitungsmoduls (3b) verloren geht. Das solchermaßen in einem dynamischen, massebezogenen Ansatz ausgelegte Zwischenverarbeitungsmodul (3b) benötigt daher keine Information über den Busleitungszustand von der Zustandserkennungseinheit (5), sondern gewährleistet vollkommen selbständig eine Aufrechterhaltung der Datenübertragung in jedem der in Betracht gezogenen Leitungszustände. Das in diesem dynamischen Masseansatz ausgelegte Zwischenverarbeitungsmodul (3b) filtert insbesondere kleine dynamische und statische Gleichtaktstörungen zuverlässig aus, weshalb es sich für gering gestörte Netzwerke gut eignet.

In Fig. 6 ist eine Realisierung für das Empfangsmodul (4) gezeigt, welches das Ausgangssignal (D) der Zwischenverarbeitungseinheit (3) in ein Ausgangssignal (A) transferiert, das von einer nachfolgenden Datenverarbeitungseinheit auswertbar ist. Die gezeigte Realisierung entspricht identisch dem Schaltungsaufbau eines jeden der beiden Komparatoren (13a, 13b) der Komparatorstufe (13) des Zwischenverarbeitungsmoduls (3b) von Fig. 4. Das heißt, das Empfangsmodul (4) gemäß Fig. 6 besteht aus einem Komparator-IC, zwei Widerständen und einem Kondensator mit dem in Fig. 5 gezeigten Schaltungsaufbau und besitzt folglich die Funktion eines invertierenden Komparators mit dem Eingangssignal (D) dynamisch nachgeführter Schwelle.

In den Figuren 7 und 8 ist eine schaltungstechnische Realisierung für das Zustandserkennungsmodul (5) angegeben. Fig. 7 zeigt zunächst den groben Aufbau des Zustandserkennungsmoduls (5) mit einem eingangsseitigen Differenz-Fensterkomparator mit zwei wählbaren Schwellen (S1, S2) und aus einer nachfolgenden Stufe zur asymmetrischen Zeitfilterung. In Figur 8 ist der Schaltungsaufbau genauer wiedergegeben. Der Differenz-Fensterkomparatorteil beinhaltet für jede Schwelle (S1, S2) je einen Komparator, wobei die ankommenden H- und L-Busleitungssignale dem einen Komparator vertauscht gegenüber dem anderen eingangsseitig über jeweilige Widerstände zugeführt sind. Zugleich sind über jeweilige Widerstände beide nichtinvertierende Komparatoreingänge und die invertierenden Komparatoreingänge jeweils mit einem vorgegebenen Spannungspegel verbunden. Die Komparatorstufe ist beispielsweise auf das Spannungsintervall zwischen -0,5V und +0,5V dimensioniert. Zur asymmetrischen Zeitfilterung sind die ausgangsseitig zusammengeführten Komparatorsignale zwischen zwei Widerstände (R3, R4) gelegt, die in Reihe zwischen eine 5V-Versorgungsspannung und den nichtinvertierenden Eingang eines nachfolgenden Komparators eingeschleift sind, wobei der nichtinvertierende Komparatoreingang zusätzlich über einen Kondensator (C2) an Masse liegt, während der invertierende Komparatoreingang mit einer 2,5V-Spannung beaufschlagt ist.

Wenn die Differenzspannung zwischen H-Busleitung und L-Busleitung innerhalb des vorgegebenen Fensters liegt, wird folglich der Kondensator (C2) langsam mit einer ersten Zeitkonstanten aufgeladen, und wenn die Differenzspannung außerhalb des Fensters liegt, wird er schnell mit einer zweiten Zeitkonstanten entladen. Die zweite Zeitkonstante ist durch die Dimensionierung des zweiten Widerstandes (R4) und des Kondensators (2) bestimmt, während die erste Zeitkonstante zusätzlich auch von der Dimensionierung des ersten Widerstands (R3) bestimmt ist. Typische Werte betragen für die erste Zeitkonstante 1ms und für die zweite Zeitkonstante 8µs. Daraus ergibt sich, daß das Ausgangssignal der so aufgebauten Zustandserkennungseinheit (5) indikativ dafür ist, ob die Differenzspannung zwischen H-Busleitung und L-Busleitung länger als die kurze, zweite Zeitkonstante einen vorgegebenen Wert unterschreitet, wodurch der Fall eines Kurzschlusses der H-Busleitung gegen die L-Busleitung eindeutig erfaßbar ist.

Aus der obigen Beschreibung wird ersichtlich, daß die gezeigte fehlertolerante Endstufe eine Aufrechterhaltung der Datenkommunikation im CAN-System des Kraftfahrzeuges nicht nur bei fehlerfreien Busleitungen, sondern auch bei Auftreten eines Einfachfehlers in Echtzeit selbständig und ohne zusätzlichen Softwareaufwand leistet. Im Fehlerfall schaltet die Endstufe selbsttätig von Differenz- auf Eindrahtbetrieb um. Es versteht sich, daß sich die Endstufe in gleicher Weise für andere digitale Datenkommunikationssysteme mit einem Zweileiterbus eignet.

## Patentansprüche

1. Fehlertolerante Endstufe für ein digitales Zweileiterbus-Datenkommunikationssystem mit einem Sendemodul (1), das ankommende serielle Datensignale (E) in Signale für eine H- und eine L-Busleitung umwandelt, und einer Empfangsstufe (2) mit einem eingangsseitig an die Busleitungen (H, L) angeschlossenen Zwischenverarbeitungsmodul (3, 3a) und einem nachgeschalteten Empfangsmodul (4), das die zwischenverarbeiteten Bussignale für eine nachgeschaltete Datenverarbeitungseinheit aufbereitet, **dadurch gekennzeichnet, daß**
ein an die Busleitungen (H, L) angeschlossenes Zustandserkennungsmodul (5) zur Erkennung eines Kurzschlußzustands der Busleitungen untereinander vorgesehen ist, das Sendemodul (1) ein vom kurzschlußindikativen Ausgangssignal (Z) des Zustandserkennungsmoduls gesteuertes Schaltmittel zum Schalten zwischen einer Differenz- und einer Eindrahtbetriebsart aufweist und daß das Zwischenverarbeitungsmodul (3, 3a) ein Mittel zum Aufbereiten der Bussignale für das Empfangsmodul (4) aufweist und vom Ausgangssignal des Zustandserkennungsmoduls (5) zur Umschaltung zwischen zwei Betriebsarten ansteuerbar ist, wobei es in einer ersten Betriebsart aus den beiden Busleitungssignalen (H, L) ein pegelangepaßtes und um einen Gleichspannungsanteil bereinigtes Differenzsignal (D1) und in der anderen Betriebsart ein pegelangepaßtes Signal (D2) aus der H-Busleitung erzeugt.

2. Fehlertolerante Endstufe für ein digitales Zweileiterbus-Datenkommunikationssystem mit einem Sendemodul (1), das ankommende serielle Datensignale (E) in Signale für eine H- und eine L-Busleitung umwandelt, und einer Empfangsstufe (2) mit einem eingangsseitig an die Busleitungen (H, L) angeschlossenen Zwischenverarbeitungsmodul (3, 3b) und einem nachgeschalteten Empfangsmodul (4), das die zwischenverarbeiteten Bussignale für eine nachgeschaltete Datenverarbeitungseinheit aufbereitet, **dadurch gekennzeichnet, daß**
ein an die Busleitungen (H, L) angeschlossenes Zustandserkennungsmodul (5) zur Erkennung eines Kurzschlußzustands der Busleitungen untereinander vorgesehen ist, das Sendemodul (1) ein vom kurzschlußindikativen Ausgangssignal (Z) des Zustandserkennungsmoduls gesteuertes Schaltmittel zum Schalten zwischen einer Differenz- und einer Eindrahtbetriebsart aufweist und daß das Zwischenverarbeitungsmodul (3, 3b) ein Mittel zum Aufbereiten der Bussignale für das Empfangsmodul (4) aufweist und zur aus den Busleitungssignalen (H, L) abgeleiteten Differenzbildung einen dreistufigen Aufbau mit einer eingangsseitigen Pegelanpassungsstufe (12), einer nachgeschalteten Signalvergleichsstufe (13) mit für jede Busleitung getrennt je einem mitgekoppelten Vergleichsmittel (13a, 13b) sowie einer ausgangsseitigen Pegelanpassungsstufe (14) besitzt.

3. Endstufe nach Anspruch 1, **dadurch gekennzeichnet, daß** das Sendemodul (1) ein oder mehrere vom Zustandserkennungsmodul (5) ansteuerbare Schaltelemente (9, 10) aufweist, durch welche der L-Ausgang in der einen Schaltstellung hochohmig an einen Zwischenspannungspegel angeschlossen und niederohmig über ein vom Eingangssignal (E) ansteuerbares Schaltelement (8) mit einem niederen Spannungspegel verbindbar ist und in der anderen Schaltstellung von beiden Spannungspegeln abgekoppelt ist.

4. Endstufe nach einem der vorhergehenden Ansprüche, **dadurch gekennzeichnet, daß** das Empfangsmodul (4) durch einen mitgekoppelten Komparator mit dynamischer Schwellennachführung gebildet ist.

5. Endstufe nach einem der vorhergehenden Ansprüche, **dadurch gekennzeichnet, daß** das Zustandserkennungsmodul als Differenz-Fensterkomparator mit nachgeschalteter asymetrischer Zeitfilterungseinheit realisiert ist.

## Claims

1. Fault-tolerant final stage for a digital two-wire bus data communication system with a transmitter module (1) converting incoming serial data signals (E) into signals for an H and an L bus line, and with a receiver stage (2) with an intermediate processing module (3, 3a), the input side of which is connected to the bus lines (H, L), and a downstream receiver module (4) editing the intermediate-processed bus signals for a downstream data processing unit, **characterised in that** a status detection module (5) connected to the bus lines (H, L) is provided for the detection of a mutual short-circuit state of the bus lines, **in that** the transmitter module (1) incorporates switching means controlled by the short-circuit indicating output signal (Z) of the status detection module for switching between a differential and a single-wire mode, and **in that** the intermediate processing module (3, 3a) incorporates means for editing the bus signals for the receiver module (4) and can be driven by the output signal of the status detection module (5) to switch between two modes, whereby it generates a level-adapted differential signal (D1) modified by a dc voltage component from the two bus lines (H, L) in a first mode and a level-adapted signal (D2) from the H bus line in the other mode.

2. Fault-tolerant final stage for a digital two-wire bus data communication system with a transmitter module (1) converting incoming serial data signals (E) into signals for an H and an L bus line, and with a receiver stage (2) with an intermediate processing module (3, 3b), the input side of which is connected to the bus lines (H, L), and a downstream receiver module (4) editing the intermediate-processed bus signals for a downstream data processing unit, **characterised in that** a status detection module (5) connected to the bus lines (H, L) is provided for the detection of a mutual short-circuit state of the bus lines, **in that** the transmitter module (1) incorporates switching means controlled by the short-circuit indicating output signal (Z) of the status detection module for switching between a differential and a single-wire mode, and **in that** the intermediate processing module (3, 3b) incorporates means for editing the bus signals for the receiver module (4) and has, for differentiation derived from the bus signals (H, L), a three-stage structure with an input-side level adaptation stage (12), a downstream signal comparator stage (13) with separate comparison means (13a, 13b) with positive feedback for each bus line, and an output-side level adaptation stage (14).

3. Final stage according to claim 1, **characterised in that** the transmitter module (1) incorporates one or more switching elements (9, 10) capable of being driven by the status detection module (5), by means of which the L output is, in the one switching position, high-impedance connected to an intermediate voltage level and can be low-impedance connected to a low voltage level via a switching element (8) capable of being driven by the input signal (E), while it is disconnected from both voltage levels in the other switching position.

4. Final stage according to any of the preceding claims, **characterised in that** the receiver module (4) is represented by a positive feedback comparator with dynamic threshold tracking.

5. Final stage according to any of the preceding claims, **characterised in that** the status detection module is implemented as a differential window comparator with a downstream asymmetrical time filter unit.

## Revendications

1. Etage final tolérant des fautes pour un système digital de communication de données à deux bus filaires avec un module d'émission (1), qui transforme des signaux sériels de données à l'arrivée (E) en signaux pour une ligne de bus H et une ligne de bus L et avec un étage de réception (2) comprenant un module de traitement intermédiaire (3, 3a) raccordé du côté de l'entrée aux lignes de bus (H, L) et un module de réception placé à la suite (4) et qui traite les signaux de bus ayant fait l'objet d'un traitement intermédiaire pour une unité de traitement de données placée à la suite, **caractérisé en ce qu'**un module de reconnaissance d'état (5) raccordé aux lignes de bus (H, L) pour détecter un état de court-circuit des lignes de bus entre elles est prévu, **en ce que** le module d'émission (1) comprend un moyen de commutation, qui est commandé par le signal de sortie (Z) du module de reconnaissance d'état indiquant un court-circuit et qui sert à réaliser une commutation entre un mode d'exploitation différentiel et un mode d'exploitation à un fil et **en ce que** le module de traitement intermédiaire (3, 3a) comprend un moyen pour préparer les signaux de bus pour le module de réception (4) et peut être commandé par le signal de sortie du module de reconnaissance d'état (5) pour réaliser une commutation entre deux modes d'exploitation, alors que dans un premier mode d'exploitation il produit à partir des deux signaux de lignes de bus (H, L ) un signal différentiel (D1)) adapté en niveau et épuré d'une quote-part de tension continue et que dans l'autre mode d'exploitation il produit à partir de la ligne de bus H un signal adapté en niveau (D2).

2. Etage final tolérant des fautes pour un système digital de communication de données à deux bus filaires avec un module d'émission (1), qui transforme des signaux sériels de données à l'arrivée (E) en signaux pour une ligne de bus H et une ligne de bus L et avec un étage de réception (2) comprenant un module de traitement intermédiaire (3, 3b) raccordé du côté de l'entrée aux lignes de bus (H, L) et un module de réception placé à la suite (4) et qui traite les signaux de bus ayant fait l'objet d'un traitement intermédiaire pour une unité de traitement de données placée à la suite, **caractérisé en ce qu'**un module de reconnaissance d'état (5) raccordé aux lignes de bus (H, L) pour détecter un état de court-circuit des lignes de bus entre elles est prévu, **en ce que** le module d'émission (1) comprend un moyen de commutation, qui est commandé par le signal de sortie (Z) du module de reconnaissance d'état indiquant un court-circuit et qui sert à réaliser une commutation entre un mode d'exploitation différentiel et un mode d'exploitation à un fil et **en ce que** le module de traitement intermédiaire (3, 3b) comprend un moyen pour préparer les signaux de bus pour le module de réception (4) et possède, pour la formation d'une différence découlant des signaux de lignes de bus (H, L), une conception à trois niveaux avec un étage d'adaptation de niveau (12) se trouvant du côté de l'entrée, un étage de comparaison de signaux (13) placé à la suite avec, pour chaque ligne de bus séparément, respectivement un moyen de comparaison (13a, 13b) faisant l'objet d'un couplage simultané ainsi qu'un étage d'adaptation de niveau (14) se trouvant du côté de la sortie.

3. Etage final selon la revendication 1, **caractérisé en ce que** le module d'émission (1) comprend un ou plusieurs éléments de commutation (9, 10) pouvant être activés par le module de reconnaissance d'état (5), par lesquels la sortie L est, dans l'une des positions de commutation, raccordée avec une haute impédance à un niveau de tension intermédiaire et peut être reliée avec une faible impédance par l'intermédiaire d'un élément de commutation (8) pouvant être activé par le signal d'entrée (E) à un niveau de tension faible et est, dans l'autre position de commutation, découplée des deux niveaux de tension.

4. Etage final selon l'une quelconque des revendications précédentes, **caractérisé en ce que** le module de réception (4) est formé par un comparateur faisant l'objet d'un couplage simultané et comprenant une poursuite dynamique de seuil.

5. Etage final selon l'une quelconque des revendications précédentes, **caractérisé en ce que** le module de reconnaissance d'état est réalisé comme comparateur différentiel de fenêtre avec une unité de filtrage de temps asymétrique placée en aval.
